# EUROPEAN PATENT SPECIFICATION

(11) **EP 1 170 881 B1**
(45) Date of publication and mention of the grant of the patent: **19.03.2008**
(21) Application number: 01115682.5
(22) Date of filing: 04.07.2001
(51) Int. Cl.: H04B 7/26

(54) **Mobile communication system and method and mobile stations and base stations in the system**
Mobilkommunikationssystem und Verfahren, Mobilstationen und Basisstationen für ein derartiges System
Système et procédé pour la communication mobile,stations mobiles et stations de base pour un tel système

(30) Priority: 06.07.2000 JP 2000205542
(43) Date of publication of application: 09.01.2002
(73) Proprietor: NEC CORPORATION, Tokyo (JP)
(72) Inventor: Shibasaki, Kazunori, NEC Saitama, Ltd., Kamikawamachi, Kodama-gun, Saitama (JP)
(74) Representative: Vossius & Partner

(56) References cited:
- EP-A- 0 845 877
- WO-A-94/30024
- WO-A-99/44306
- US-A- 4 301 539
- US-A- 5 677 908
- US-A- 5 872 774
- PATENT ABSTRACTS OF JAPAN vol. 1996, no. 05, 31 May 1996 (1996-05-31) & JP 08 019038 A (NEC CORP), 19 January 1996 (1996-01-19)

## Description

The present invention relates to a mobile communication system and method, and mobile stations and base stations in the system, in particular, in which the code division multiple access (CDMA) system having a handover function is used.

### Description of the Related Art

In a mobile communication system using the CDMA system, when a mobile station executes handover from a base station, with which the mobile station is communicating, to an adjacent base station, the mobile station executes communication with plural base stations by using the same frequency at the same time, which is a feature of the CDMA system. This technology is called soft handover.

When the mobile station executes the soft handover, it is indispensable that plural base stations transmit the same content signal to the mobile station at the same timing. In order to execute this, each base station is provided with a receiver of the global positioning system (GPS), and when the plural base stations transmit the signal, the plural base stations synchronize the signal by using the GPS receiver.

However, in the case that each base station provides the receiver of the GPS, the manufacturing cost of the base station increases and also the load for the mobile communication system increases compared with the case that the base station is not provide with the receiver of the GPS. Therefore, it must be studied that the soft handover can be executed without using the GPS.

And when the mobile station executes the soft handover, the plural base stations must transmit the signal by synchronizing the signal among the plural base stations. In order to execute this, it is necessary that complex hardware and complex software are controlled. Therefore, this control must be improved.

US 5,872,774 describes mobile station assisted timing synchronization in a CDMA communication system, wherein a slave base station attains synchronization with a reference base station through messages transmitted from and received by a mobile station in the soft handoff region between the reference base station and the slave base station. WO 99/44306 describes a method and an apparatus for providing time adjustment to a wireless communication system. WO 94/30024 describes time alignment of transmission in a down-link of a CDMA system, wherein the time difference between the connected base station's signal and a macro-diversity candidate base station's signal is measured by a mobile station. EP 0 845 877 A2 describes a mobile communication system for accomplishing handover with phase difference of frame sync signals being corrected.

It is therefore an object of the present invention to provide a mobile communication system and method, and mobile stations and base stations in the system, in which a technology being capable of simply executing soft handover with low cost is used.

According to a first aspect of the present invention for achieving the object mentioned above, there is provided a mobile communication system. The mobile communication system provides plural base stations and plural mobile' stations. A mobile station requests handover from the wireless zone of a base station in which the mobile station exists to the wireless zone of another base station to which the handover is executed at the time when the mobile station moves from the wireless zone of the base station to the wireless zone of another base station. And the mobile station comprises a first measuring means for measuring first phase difference between a signal that the mobile station is transmitting to the base station and a signal that was transmitted from the base station to the mobile station, and a first transmitting means for transmitting the first phase difference measured at the first measuring means to another base station when the mobile station requests the handover. And another base station comprises a second measuring means for measuring second phase difference between a signal that another base station is transmitting to the mobile station and a signal that was transmitted from the mobile station to another base station when the handover is executing, an adjusting means for adjusting phase so that the phase of the signal transmitted from another base station to the mobile station is made to be equal to the phase of the signal transmitted from the base station to the mobile station by using information of the first phase difference and the second phase difference, and a second transmitting means for transmitting a signal, which the adjusting means adjusted, to the mobile station after the handover was executed. And another base station transmits a signal synchronized with the signal, which was transmitted from the base station to the mobile station, to the mobile station after the handover was executed, by that the second transmitting means transmits the signal adjusted at the adjusting means to the mobile station.

According to a second aspect of the present invention, there is provided a mobile station in a mobile communication system. The mobile station provides a measuring means for measuring first phase difference between a signal that the mobile station is transmitting to a base station from which handover is executed and a signal that was transmitted from the base station from which the handover is executed to the mobile station, and a transmitting means for transmitting the first phase difference measured at the measuring means to another base station to which the handover is executed when the mobile station requests the handover.

According to a third aspect of the present invention, there is provided a base station in a mobile communication system. The base station provides a measuring means for measuring second phase difference between a signal that the base station is transmitting to a mobile station executing handover and a signal that was transmitted from the mobile station executing the handover to the base station, an adjusting means for adjusting phase so that the phase of the signal transmitted from another base station to which the handover is executed to the mobile station is made to be equal to the phase of the signal transmitted from the base station to the mobile station by using information of first phase difference measured at the mobile station and the second phase difference, and a transmitting means for transmitting a signal, which the adjusting means adjusted, to the mobile station after the handover was executed.

According to a fourth aspect of the present invention, there is provided a mobile communication method in a mobile communication system in which plural base stations and plural mobile stations are provided. And at the case that a mobile station requests handover from the wireless zone of a base station in which the mobile station exists to the wireless zone of another base station to which the handover is executed when the mobile station moves, the mobile station provides the steps of; measuring first phase difference between a signal that the mobile station is transmitting to the base station and a signal that was transmitted from the base station to the mobile station, and transmitting the measured first phase difference to another base station when the mobile station requests the handover. And another base station provides the steps of measuring second phase difference between a signal that another base station is transmitting to the mobile station and a signal that was transmitted from the mobile station to another base station when the mobile station is executing the handover, adjusting phase so that the phase of the signal transmitted from another base station to the mobile station is made to be equal to the phase of the signal transmitted from the base station to the mobile station by using information of the first phase difference and the second phase difference, and transmitting a signal, which the adjusting means adjusted, to the mobile station after the handover was executed. And another base station transmits a signal synchronized with the signal, which was transmitted from the base station to the mobile station, to the mobile station after the handover was executed, by that the second transmitting means transmits the signal adjusted at the adjusting means to the mobile station.

According to the present invention, when handover is executed, another base station, to which the handover is executed, obtains the timing of a signal transmitted from a base station, from which the handover is executed, when another base station received an uplink signal from the mobile station, and another base station adjusts the timing with which another base station transmits a signal.

The objects and features of the present invention will become more apparent from the consideration of the following detailed description taken in conjunction with the accompanying drawings in which:
Fig. 1 is a block diagram showing a structure of an embodiment of a mobile communication system of the present invention;
Fig. 2 is a block diagram showing an internal structure of an upper rank apparatus in the mobile communication system at the embodiment of the present invention;
Fig. 3 is a block diagram showing an internal structure of a base station in the mobile communication system at the embodiment of the present invention;
Fig. 4 is a block diagram showing an internal structure of a mobile station in the mobile communication system at the embodiment of the present invention;
Fig. 5 is a diagram showing a structure of a signal transmitting and receiving between the mobile station and the base stations at the embodiment of the mobile communication system of the present invention;
Fig. 6 is a diagram showing a state before the mobile station executes soft handover from the wireless zone of the base station to the wireless zone of another base station at the embodiment of the mobile communication system of the present invention;
Fig. 7 is a timing chart showing the phase difference of transmitting and receiving signals between the mobile station and the base stations at the embodiment of the radio communication system of the present invention; and
Fig. 8 is a diagram showing a state that the mobile station is executing soft handover when the mobile station is moving from the wireless zone of the base station to the wireless zone of another base station at the embodiment of the mobile communication system of the present invention.

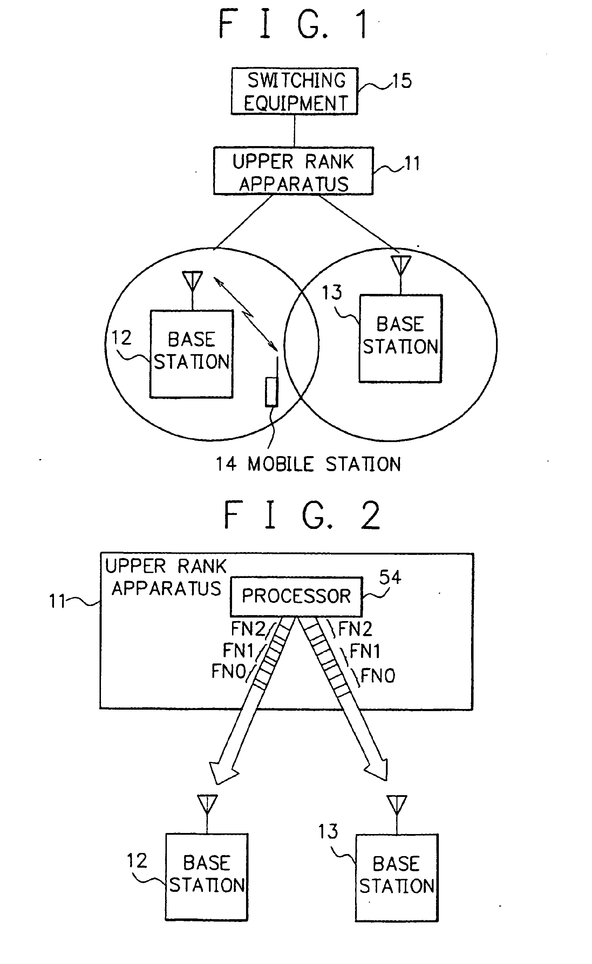

Referring now to the drawings, an embodiment of the present invention is explained in detail. Fig. 1 is a block diagram showing a structure of an embodiment of a mobile communication system of the present invention. As shown in Fig. 1, base stations 12 and 13 are connected to an upper rank apparatus 11 through asynchronous transfer mode (ATM) lines. And the upper rank apparatus 11 is also connected to switching equipment 15 for mobile communication through ATM lines. And a mobile station 14 communicates with the base station 12 or the base station 13 in the CDMA system. In this, the number of the base stations is not limited to two, and also the number of the mobile stations is not limited to one. And actually, a large number of base stations and a large number of mobile stations are provided in the mobile communication system.

Fig. 2 is a block diagram showing an internal structure of the upper rank apparatus 11 in the mobile communication system in the embodiment of the present invention. As shown in Fig. 2, a state, in which packet data attached the frame number (FN) 0 to 2 are being transmitted to both the base stations 12 and 13 at the same timing, is shown at the time of the soft handover. In Fig. 2, a processor 54 executes a coding process for signals of the upper rank apparatus 11, and transmits the same content signals to the base stations 12 and 13 at the same timing. In this, the signals are voice signals and image signals.

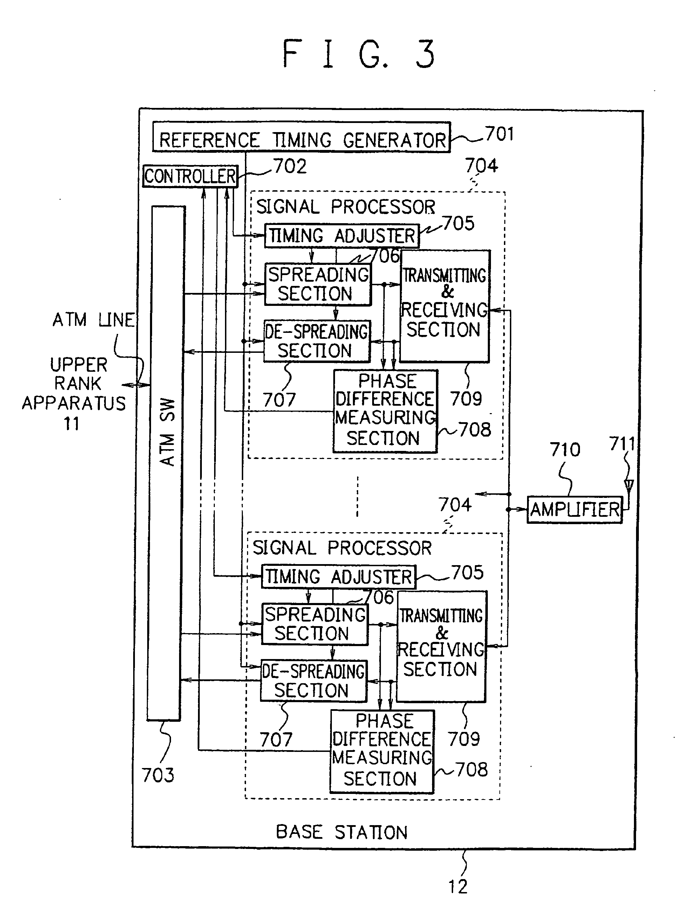

Fig. 3 is a block diagram showing an internal structure of the base station 12 in the mobile communication system as an embodiment of the present invention. As shown in Fig. 3, the base station 12 provides an ATM switch (ATM SW) 703 being an interface that receives signals outputted from the upper rank apparatus 11 through ATM lines and outputs signals from the mobile station 14 through the ATM lines to the upper rank apparatus 11, a reference timing generator 701 that generates transmitting/receiving timing of signals at the base station 12 itself, plural signal processors 704 that apply various processes to received signals and transmitted signals at the generated timing, an amplifier 710 that amplifies the power of the transmitting signals and the received signals, an antenna 711 that transmits the amplified signals and receives the signals transmitted from the mobile station 14, and a controller 702 that controls a timing adjuster 705 in the signal processor 704 so that both a base station from which handover is executed and a base station to which the handover is executed process signals at the same timing based on the phase difference measured at a phase difference measuring section 708 in the signal processor 704.

The signal processor 704 provides a transmitting and receiving section 709 that modulates the signals from the upper rank apparatus 11 and demodulates the signals transmitted from the mobile station 14, the phase difference measuring section 708 being a second measuring means that measures the phase difference between signals that are transmitted to a mobile station executing the handover and signals transmitted from the mobile station, a spreading section 706 that spreads signals to be transmitted, a de-spreading section 707 that de-spreads received signals, and the timing adjuster 705 that adjusts the timing so that both a base station from which handover is executed and a base station to which the handover is executed process signals at the same timing. In this, a second transmitting means is defined as that signals are modulated at the transmitting and receiving section 709 and the signals are amplified at the amplifier 710 and the amplified signals are transmitted to the mobile station 14 through the antenna 711.

At the explanation mentioned above, only the base station 12 was explained, however, the base station 13 has also the same structure that the base station 12 has.

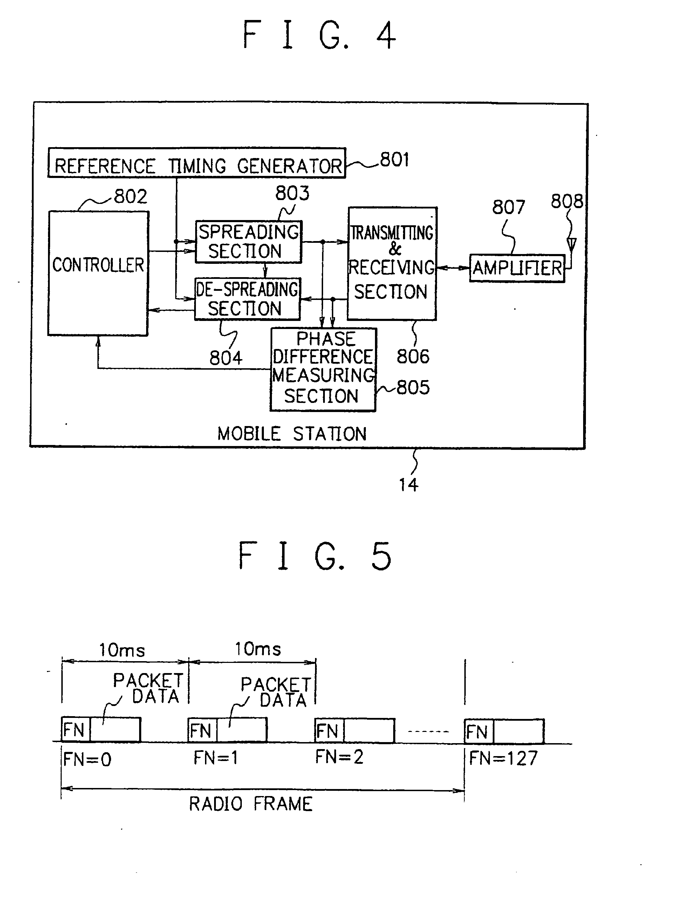

Fig. 4 is a block diagram showing an internal structure of the mobile station 14 in the mobile communication system as an embodiment of the present invention. As shown in Fig. 4, the mobile station 14 provides a reference timing generator 801 that generates timing for processing transmitting and receiving signals at the mobile station 14, a phase difference measuring section 805 being a first measuring means that measures the phase difference between signals transmitted to the base stations 12 and 13 and signals transmitted from the base stations 12 and 13, a spreading section 803 that spreads signals to be transmitted, a controller 802 that controls the signal spreading timing at the spreading section 803 based on the phase difference measured at the phase difference measuring section 805, a de-spreading section 804 that de-spreads the received signals corresponding to the generated timing, a transmitting and receiving section 806 that modulates the signals to be transmitted and demodulates the received signals, an amplifier 807 that amplifies the signals transmitted from the base stations 12 and 13 and the signals to be transmitted to the base stations 12 and 13, and an antenna 808 that transmits the amplified signals to the base stations 12 and 13 and receives the signals transmitted from the base stations 12 and 13. In this, a first transmitting means is defined as that signals are modulated at the transmitting and receiving section 806 and the signals are amplified at the amplifier 807 and the amplified signals are transmitted to the base stations 12 and 13 through the antenna 808.

Fig. 5 is a diagram showing a structure of a signal transmitting and receiving between the mobile station 14 and the base stations 12 and 13 as an embodiment of the mobile communication system of the present invention. And this structure of the signal shows an ATM cell, that is, packet data. This signal is generated by that a signal transmitted from another mobile station through the switching equipment 15 is processed being such as coding processed at the upper rank apparatus 11. And the signal transmitting/receiving between the mobile station 14 and the base stations 12 and 13 is made to be packet data every 10 ms, and a FN is attached to each packet data. The FN is counted, for example, by the repetition of 0 to 127, and one radio frame is composed of FN = 0 to FN = the counted number.

In Fig. 5, one radio frame consists of FN 0 to FN 126, and the interval among the packet data is 10 ms, however, this is an example and one radio frame is not limited to this example.

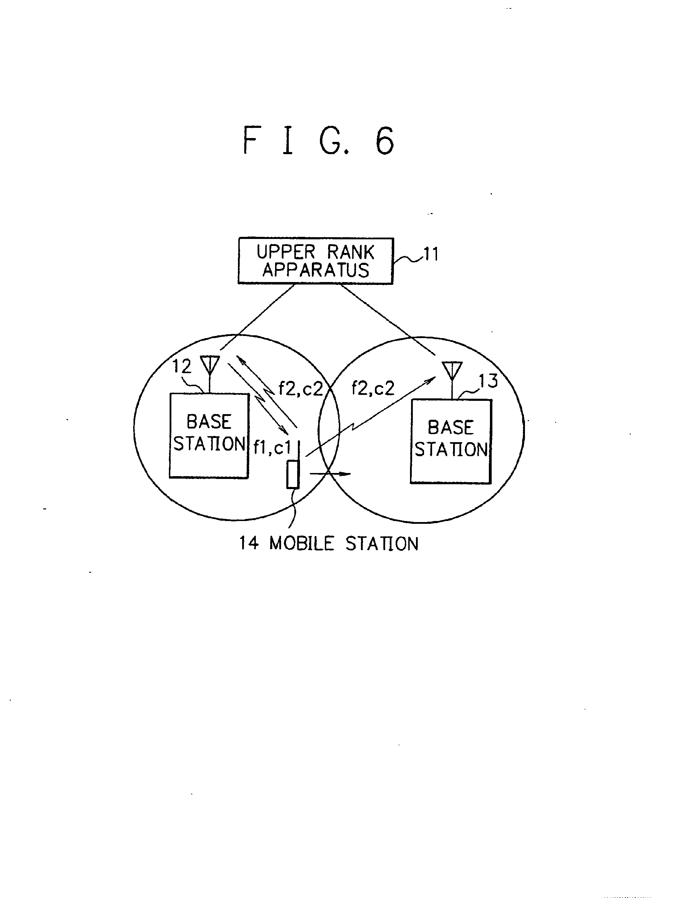

Next, referring to drawings, the operation of the mobile communication system of the present invention is explained. Fig. 6 is a diagram showing a state before the mobile station 14 executes soft handover from the wireless zone of the base station 12 to the wireless zone of the base station 13 as an embodiment of the mobile communication system of the present invention. In this, a signal having the structure shown in Fig. 5 is transmitted from the base station 12 to the mobile station 14 by that, for example, the frequency is f1, and the spreading code is c1, and a signal having the structure shown in Fig. 5 is transmitted from the mobile station 14 to the base station 12 by that, for example, the frequency is f2, and the spreading code is c2.

In this, a downlink communication signal transmitted from the base station 12 to the mobile station 14 is a signal outputted from the upper rank apparatus 11 through an ATM line that is spread and radio modulated at the base station 12. That is, the signal spread and radio modulated at the base station 12 is transmitted to the mobile station 14.

Actually, a signal from the upper rank apparatus 11 is inputted to the ATM SW 703 in the base station 12. And the signal is inputted to the spreading section 706 from the ATM SW 703, and the spreading section 706 spreads the signal based on an instruction from the controller 702 through the timing adjuster 705, and outputs the spread signal to the transmitting and receiving section 709.

The transmitting and receiving section 709 modulates the inputted signal and outputs the modulated signal to the amplifier 710. The amplifier 710 amplifies the power of the modulated signal and transmits the amplified signal to the mobile station 14 through the antenna 711 by that the frequency is f1 and the spreading code is c1. In this, the signal outputted from the spreading section 706 is also inputted to the phase difference measuring section 708, however the inputted signal is discarded at the phase difference measuring section 708 at this time.

That is, only when the mobile station 14 requests handover, the phase difference measuring section 708 measures the phase difference. In this case, the phase difference is measured by the same method that the mobile station 14 executes the measurement of the phase difference. Measuring the phase difference is explained later.

At the mobile station 14, the signal transmitted from the base station 12 is received at the antenna 808 and the received signal is inputted to the amplifier 807. The amplifier 807 amplifies the power of the received signal and the amplified signal is outputted to the transmitting and receiving section 806. The transmitting and receiving section 806 demodulates the inputted signal and outputs the demodulated signal to the de-spreading section 804 and the phase difference measuring section 805. The de-spreading section 804 de-spreads the inputted signal at the timing generated at the reference signal generator 801 and outputs the de-spread signal to the controller 802. The phase difference measuring section 805 stores temporarily the inputted signal in a memory (not shown) in the phase difference measuring section 805.

After this, when the mobile station 14 desires to transmit a signal to the base station 12, a signal generated at a signal generator (not shown) is outputted to the spreading section 803. The spreading section 803 spreads the inputted signal at the timing generated at the reference timing generator 801 and outputs the spread signal to the transmitting and receiving section 806 and the phase difference measuring section 805.

The transmitting and receiving section 806 modulates the inputted signal and outputs the modulated signal to the amplifier 807. The amplifier 807 amplifies the inputted signal and transmits the amplified signal to the base station 12 through the antenna 808 by that the frequency is f2 and the spreading code is c2. The phase difference measuring section 805 measures the phase difference between the signal stored in the memory (signal received from the base station 12) and the signal transmitted to the base station 12, and outputs the measured result to the controller 802. The controller 802 stores the measured result in a memory (not shown).

The base station 12 receives the signal through the antenna 711. The received signal is outputted to the amplifier 710. The amplifier 710 amplifies the power of the inputted signal and outputs the amplified signal to the transmitting and receiving section 709. The transmitting and receiving section 709 demodulates the inputted signal and outputs the demodulated signal to the de spreading section 707. The de-spreading section 707 de-spreads the inputted signal at the timing generated at the reference timing generator 701 and outputs the de-spread signal to the upper rank apparatus 11 through the ATM SW 703. The signal outputted from the transmitting and receiving section 709 is also inputted to the phase difference measuring section 708, however, the inputted signal is discarded at the phase difference measuring section 708.

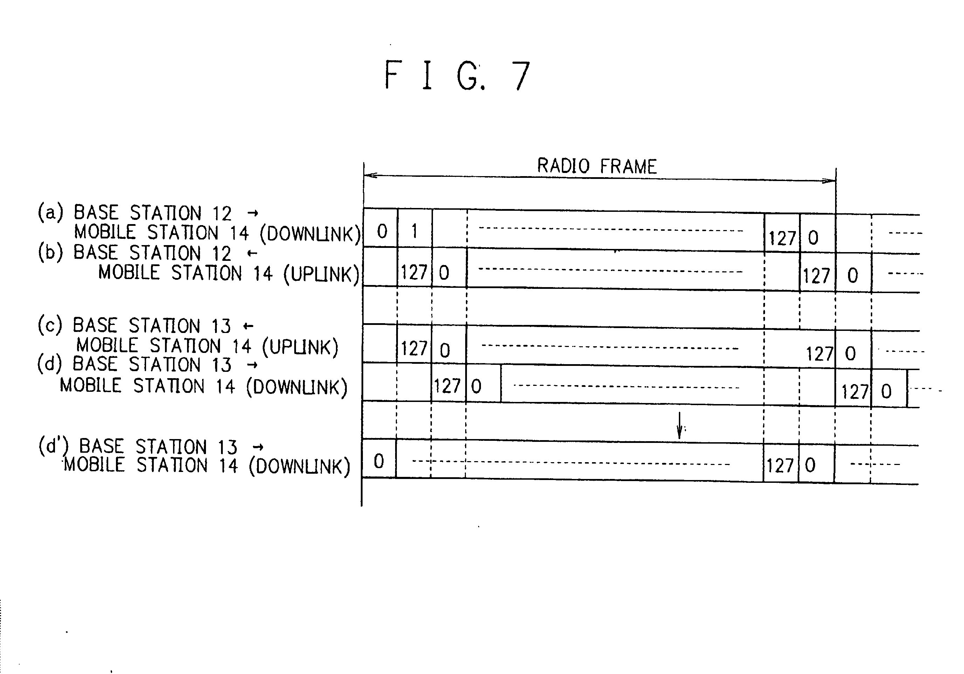

Next, the phase difference of the transmitted and received signals is explained. Fig. 7 is a timing chart showing the phase difference of transmitted and received signals between the mobile station 14 and the base stations 12 and 13 as an embodiment of the radio communication system of the present invention.

As shown in Fig. 7 (a) and (b), there is phase difference of, for example, two frames, that is, 20 ms between a signal transmitted from the base station 12 to the mobile station 14 and a signal transmitted from the mobile station 14 to the base station 12. And as shown in Fig. 7 (c) and (d), there is phase difference of, for example, one frame, that is, 10 ms between a signal transmitted from the mobile station 14 to the base station 13 and a signal transmitted from the base station 13 to the mobile station 14. When it is assumed that the phase difference occurs as mentioned above, as shown in Fig. 7 (a) and (d), there is the phase difference of 30 ms between the signal transmitted from the base station 12 to the mobile station 14 and the signal transmitted from the base station 13 to the mobile station 14. This occurs because the signals transmitted from the base stations 12 and 13 are not synchronized.

And at Fig. 7 (b) and (c), the timing of the transmitted signal from the mobile station 14 is shown, therefore the timing is the same.

As mentioned above, the phase difference information, which was measured at the phase difference measuring section 805 in the mobile station 14 and outputted to the controller 802 and memorized in the controller 802, is 20 ms, and this phase difference information is transmitted to the base station 13 to which the handover is executed. This transmission of the information is explained later in more detail. And when the mobile station 14 is executing the handover from the base station 12 to the base station 13, the base station 13 can obtain the phase difference of, for example, 10 ms between the uplink signal and the downlink signal between the base station 13 and the mobile station 14, by transmitting and receiving signals between the base station 13 and the mobile station 14.

In the embodiment of the mobile communication system of the present invention, a signal, which the base station 13 to which the handover is executed transmits to the mobile station 14, is synchronized with a signal, which the base station 12 from which the handover is executed transmits to the base station 14.

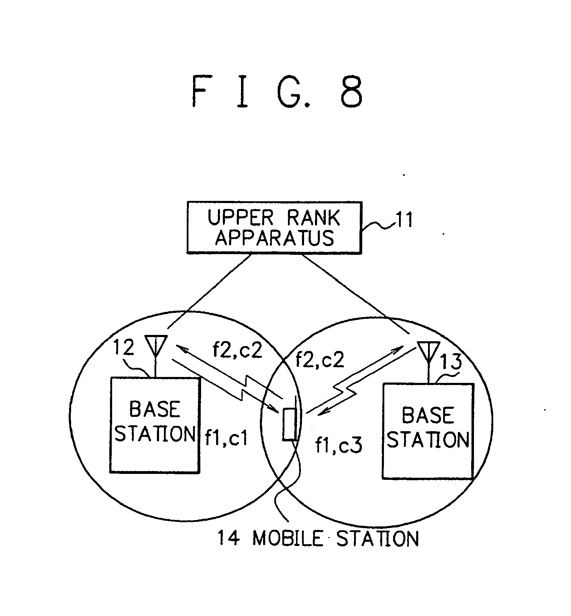

Fig. 8 is a diagram showing a state that the mobile station 14 is executing soft handover when the mobile station 14 is moving from the wireless zone of the base station 12 to the wireless zone of the base station 13 as an embodiment of the mobile communication system of the present invention. As shown in Fig. 8, when the mobile station 14 is moving from the wireless zone of the base station 12 to the wireless zone of the base station 13, the mobile station 14 transmits an uplink communication signal by, for example, that the frequency is f2 and the spreading code is c2 to the base station 13.

At this time, the signal transmitted from the mobile station 14 to the base station 13 has the phase difference information at the mobile station 14. Therefore, the base station 13 can obtain the information that the phase difference of, for example, 20 ms exists between the signal transmitted from the base station 12 to the mobile station 14 and the signal transmitted from the mobile station 14 to the base station 12 as shown in Fig. 7 (a) and (b).

And as mentioned above, the base station 13 can obtain the phase difference between the uplink signal and the downlink signal between the base station 13 and the mobile station 14, by transmitting and receiving signals between the base station 13 and the mobile station 14. Actually, when the mobile station 14 requests the handover of the base station 13, at the base station 13, the signal (transmitted from the mobile station 14 to the base station 13) inputted to the phase difference measuring section 708 outputted from the transmitting and receiving section 709 is stored in the memory (not shown) in the phase difference measuring section 708. After this, when the base station 13 transmits a signal to the mobile station 14, at the base station 13, a signal outputted from the spreading section 706 is inputted to the phase difference measuring section 708, and the phase difference measuring section 708 measures the phase difference between the signal outputted from the spreading section 706 and the signal stored in the memory.

After this, the base station 13 adjusts the timing of the signal transmitted from the base station 13 to the mobile station 14 shown in Fig. 7 (d) to Fig. 7 (d') by using an adjusting means such as a buffer memory (not shown) in the controller 702 for the mobile station 14. With this, the timing of the signal transmitted from the base station 13 to the mobile station 14 shown in Fig. 7 (d') is synchronized with the timing of the signal transmitted from the base station 12 to the mobile station 14 shown in Fig. 7 (a), and the base station 13 transmits the signal to the mobile station 14 by that the frequency is f1 and the spreading code is c3. Actually, the signal shown in Fig. 7 (d') is synchronized with the signal shown in Fig. 7 (a) in a state that the signal shown in Fig. 7 (d') was delayed by one radio frame.

And the upper rank apparatus 11 is controlling both the base stations 12 and 13, therefore, the upper rank apparatus 11 can transmit a signal, which is transmitted to the mobile station 14, to the base stations 12 and 13 at the same timing. Therefore, the timing of the downlink signal from the base station 13 to the mobile station 14 by transmitting at the frequency f1 and the spreading code c3 becomes the same timing of the downlink signal from the base station 12 to the mobile station 14 by transmitting at the frequency f1 and the spreading code c1, and the soft handover can be realized.

In this, in the case that the amount of phase difference at the base station 13 becomes large and exceeds the capacity of the buffer memory, the base station 13 informs the upper rank apparatus 11 of this. And the upper rank apparatus 11 adjusts the transmitting timing of signals by using this as a trigger.

As mentioned above, according to the embodiment of the mobile communication system of the present invention, it is not necessary that the receiver of the GPS system is provided in each of the base stations 12 and 13, therefore, the base stations 12 and 13 can be small sized. And the base stations 12 and 13 transmit signals to the mobile station 14 without synchronizing with the upper rank apparatus 11. Therefore, in a case that a mobile communication system is a system in which signals are transmitted between a base station and a mobile station by synchronizing with an upper rank apparatus, when the upper rank apparatus has some trouble, there will be some problem in the radio communication system. However, the mobile communication system of the present invention does not have this problem and the reliability of the radio communication system is improved.

In the embodiment of the present invention, the case in which signals are synchronized in a frame unit is explained. However, it is possible that the signals are synchronized in a chip rate level, in this case, the synchronization can be adjusted in a finer level.

As mentioned above, according to the present invention, the phase difference of signals transmitted and received between a mobile station and base stations is measured, and the signals with a same phase are transmitted from a base station, to which the handover is executed, to the mobile station. Therefore, low cost and easy handover can be executed without synchronizing signals between base stations.

While the present invention has been described with reference to the particular illustrative embodiment, it is not to be restricted by that embodiment but only by the appended claims.

## Claims

1. A mobile communication system in which a plurality of base stations (12,13) and a plurality of mobile stations are provided and a mobile station (14) requests handover from the wireless zone of a base station (12) in which said mobile station (14) exists to the wireless zone of another base station (13) to which said handover is executed at the time when said mobile station (14) moves from the wireless zone of said base station (12) to the wireless zone of said another base station (13), wherein:
said mobile station (14), comprising:
a first measuring means (805) for measuring first phase difference between a signal that said mobile station (14) is transmitting to said base station (12) and a signal that was transmitted from said base station (12) to said mobile station (14), and
a first transmitting means (806) for transmitting said first phase difference measured at said first measuring means (805) to said another base station (13) when said mobile station (14) requests said handover, and
said another base station (13), comprising:
a second measuring means (708) for measuring a second phase difference between a signal that said another base station (13) is transmitting; to said mobile station (14) and a signal that was transmitted from said mobile station (14) to said another base station (13) when said handover is being executed;
an adjusting means (705) for adjusting phase so that the phase of said signal transmitted from said another base station (13) to said mobile station (14) is made to be equal to the phase of said signal transmitted from said base station (12) to said mobile station (14) by using information of said first phase difference and said second phase difference; and
a second transmitting means (709) for transmitting a signal, which said adjusting means (705) adjusted, to said mobile station (14) after said handover was executed, wherein:
said another base station (13) is operable to transmit a signal synchronized with said signal, which was transmitted from said base station (12) to said mobile station (14), to said mobile station (14) after said handover was executed, by that said second transmitting means (709) transmits said signal adjusted at said adjusting means (705) to said mobile station (14).

2. A mobile communication system in accordance with claim 1, wherein:
each of said plurality of base stations (12,13) uses signals of the same frequency band, and
said plurality of base stations (12,13) execute a plurality of mobile communications at the same time.

3. A mobile communication system in accordance with claim 1 or 2, wherein:
said base station (12) and said another base station (13) to which said handover is executed are connected to the same upper rank apparatus.

4. A mobile station (14) in a mobile communication system, comprising:
a measuring means (805) for measuring a first phase difference between a signal that said mobile station (14) is transmitting to a base station (12) from which a handover is executed and a signal that was transmitted from said base station (12) from which said handover is executed to said mobile station (14), and
a transmitting means (806) for transmitting said first phase difference measured at said measuring means (805) to another base station (13) to which said handover is executed when said mobile station (14) requests said handover.

5. A base station in a mobile communication system, comprising:
a measuring means (708) for measuring a second phase difference between a signal that is transmitted from said base station (12) to a mobile station (14) and a signal that includes data of a first phase difference and is transmitted from said mobile station (14) to said base station (12), the first phase difference being a phase difference between a signal that is transmitted from said mobile station (14) to another base station (13) and a signal that is transmitted from another base station (13) to said mobile station
an adjusting means (705) for synchronizing the second phase difference with the first phase difference; and
a transmitting means (709) for transmitting a signal, which said adjusting means (705) adjusted, to said mobile station (14) after said handover was executed.

6. A mobile communication method in mobile communication system in which plural base stations and plural mobile stations are provided, and
in the case that a mobile station (14) requests handover from the wireless zone base station (12) in which said mobile station (14) exists to the wireless zone of another base station (13) to which said handover is executed when said mobile station (14) moves
said mobile station (14) executing the steps of:
measuring a first phase difference between a signal that said mobile station (14) is transmitting to said base station (12) and a signal that was transmitted from said base station (12) to said mobile station (14); and
transmitting said measured first phase difference to said another base station (13) when said mobile station (14) requests said handover, and
said another base station (13) executing the steps of:
measuring a second phase difference between a signal that said another base station (13) is transmitting to said mobile station (14) and a signal that was transmitted from said mobile station (14) to said another base station (13) when said mobile station (14) is executing said handover;
adjusting a phase so that the phase of said signal transmitted from said another base station (13) to said mobile station (14) is made to be equal to the phase of said signal transmitted from said base station (12) to said mobile station (14) by using information of said first phase difference and said second phase difference; and
transmitting a signal, which an adjusting means (705) adjusted, to said mobile station (14) after said handover was executed, whereby
said another base station (13) transmits a signal synchronized with said signal, which was transmitted from said base station (12) to said mobile station (14), to said mobile station (14) after said handover was executed, by that a second transmitting means (709) transmits said signal adjusted at said adjusting means (705) to said mobile station (14).

## Patentansprüche

1. Mobilkommunikationssystem, in dem mehrere Basisstationen (12, 13) und mehrere Mobilstationen bereitgestellt sind und eine Mobilstation (14) eine Übergabe von der Drahtloszone einer Basisstation (12), in der die Mobilstation (14) vorhanden ist, zur Drahtloszone einer anderen Basisstation (13), zu der die Übergabe erfolgt, zu der Zeit fordert, zu der sich die Mobilstation (14) aus der Drahtloszone der Basisstation (12) in die Drahtloszone der anderen Basisstation (13) bewegt, wobei:
die Mobilstation (14) aufweist:
eine erste Messeinrichtung (805) zum Messen einer ersten Phasendifferenz zwischen einem Signal, das die Mobilstation (14) zur Basisstation (12) sendet, und einem Signal, das von der Basisstation (12) zur Mobilstation (14) gesendet wurde, und
eine erste Sendeeinrichtung (806) zum Senden der an der ersten Messeinrichtung (805) gemessenen ersten Phasendifferenz zu der anderen Basisstation (13), wenn die Mobilstation (14) die Übergabe fordert, und
wobei die andere Basisstation (13) aufweist:
eine zweite Messeinrichtung (708) zum Messen einer zweiten Phasendifferenz zwischen einem Signal, das die andere Basisstation (13) zur Mobilstation (14) sendet, und einem Signal, das von der Mobilstation (14) zu der anderen Basisstation (13) gesendet wurde, wenn die Übergabe ausgeführt wird,
eine Einstelleinrichtung (705) zum Einstellen der Phase, so dass die Phase des von der anderen Basisstation (13) zur Mobilstation (14) gesendeten Signals gleich der Phase des von der Basisstation (12) zur Mobilstation (14) gesendeten Signals gemacht wird, indem Informationen zu der ersten Phasendifferenz und der zweiten Phasendifferenz verwendet werden, und
eine zweite Sendeeinrichtung (709) zum Senden eines Signals, das die Einstelleinrichtung (705) eingestellt hat, zur Mobilstation (14), nachdem die Übergabe ausgeführt wurde, wobei:
die andere Basisstation (13) betreibbar ist, um ein mit dem Signal, das von der Basisstation (12) zur Mobilstation (14) gesendet wurde, synchronisiertes Signal zu der Mobilstation (14) zu senden, nachdem die Übergabe ausgeführt wurde, indem die zweite Sendeeinrichtung (709) das an der Einstelleinrichtung (705) eingestellte Signal zu der Mobilstation (14) sendet.

2. Mobilkommunikationssystem nach Anspruch 1, wobei:
jede der mehreren Basisstationen (12, 13) Signale des gleichen Frequenzbands verwendet und
die mehreren Basisstationen (12, 13) mehrere Mobilkommunikationen gleichzeitig ausführen.

3. Mobilkommunikationssystem nach Anspruch 1 oder 2, wobei:
die Basisstation (12) und die andere Basisstation (13), zu der die Übergabe erfolgt, mit derselben höherrangigen Vorrichtung verbunden sind.

4. Mobilstation (14) in einem Mobilkommunikationssystem, aufweisend:
eine Messeinrichtung (805) zum Messen einer ersten Phasendifferenz zwischen einem Signal, das die Mobilstation (14) zu einer Basisstation (12), von der eine Übergabe ausgeführt wird, sendet, und einem Signal, das von der Basisstation (12), von der die Übergabe erfolgt, zu der Mobilstation (14) gesendet wurde, und
eine Sendeeinrichtung (806) zum Senden der an der Messeinrichtung (805) gemessenen ersten Phasendifferenz zu einer anderen Basisstation (13), zu der die Übergabe erfolgt, wenn die Mobilstation (14) die Übergabe fordert.

5. Basisstation in einem Mobilkommunikationssystem, aufweisend:
eine Messeinrichtung (708) zum Messen einer zweiten Phasendifferenz zwischen einem Signal,' das von der Basisstation (12) zu einer Mobilstation (14) gesendet wird, und einem Signal, das Daten einer ersten Phasendifferenz aufweist und von der Mobilstation (14) zu der Basisstation (12) gesendet wird, wobei die erste Phasendifferenz eine Phasendifferenz zwischen einem Signal, das von der Mobilstation (14) zu einer anderen Basisstation (13) gesendet wird, und einem Signal, das von der anderen Basisstation (13) zu der Mobilstation gesendet wird, ist,
eine Einstelleinrichtung (705) zum Synchronisieren der zweiten Phasendifferenz mit der ersten Phasendifferenz und
eine Sendeeinrichtung (709) zum Senden eines Signals, das die Einstelleinrichtung (705) eingestellt hat, zu der Mobilstation (14), nachdem die Übergabe erfolgt ist.

6. Mobilkommunikationsverfahren in einem Mobilkommunikationssystem, in dem mehrere Basisstationen und mehrere Mobilstationen bereitgestellt sind, wobei
in dem Fall, in dem eine Mobilstation (14) eine Übergabe von der Drahtloszone einer Basisstation (12), in der die Mobilstation (14) vorhanden ist, zur Drahtloszone einer anderen Basisstation (13), zu der die Übergabe erfolgt, fordert, wenn sich die Mobilstation (14) bewegt,
die Mobilstation (14) folgende Schritte ausführt:
Messen einer ersten Phasendifferenz zwischen einem Signal, das die Mobilstation (14) zur Basisstation (12) sendet, und einem Signal, das von der Basisstation (12) zur Mobilstation (14) gesendet wurde, und
Senden der gemessenen ersten Phasendifferenz zu der anderen Basisstation (13), wenn die Mobilstation (14) die Übergabe fordert, und
wobei die andere Basisstation (13) folgende Schritte ausführt:
Messen einer zweiten Phasendifferenz zwischen einem Signal, das die andere Basisstation (13) zu der Mobilstation (14) sendet, und einem Signal, das von der Mobilstation (14) zu der anderen Basisstation (13) gesendet wurde, wenn die Mobilstation (14) die Übergabe ausführt,
Einstellen einer Phase, so dass die Phase des von der anderen Basisstation (13) zu der Mobilstation (14) gesendeten Signals gleich der Phase des von der Basisstation (12) zu der Mobilstation (14) gesendeten Signals gemacht wird, indem Informationen zu der ersten Phasendifferenz und der zweiten Phasendifferenz verwendet werden, und
Senden eines Signals, das eine Einstelleinrichtung (705) eingestellt hat, zu der Mobilstation (14), nachdem die Übergabe ausgeführt wurde, wobei
die andere Basisstation (13) ein mit dem Signal, das von der Basisstation (12) zu der Mobilstation (14) gesendet wurde, synchronisiertes Signal zu der Mobilstation (14) sendet, nachdem die Übergabe ausgeführt wurde, indem eine zweite Sendeeinrichtung (709) das an der Einstelleinrichtung (705) eingestellte Signal zu der Mobilstation (14) sendet.

## Revendications

1. Système de communication mobile dans lequel une pluralité de stations de base (12, 13) et une pluralité de stations mobiles sont prévues et une station mobile (14) demande un transfert intercellulaire de la zone sans fil d'une station de base (12) dans laquelle ladite station mobile (14) existe à la zone sans fil d'une autre station de base (13) à laquelle ledit transfert intercellulaire est exécuté au moment où ladite station mobile (14) se déplace de la zone sans fil de ladite station de base (12) à la zone sans fil de ladite une autre station de base (13), dans lequel :
ladite station mobile (14), comportant :
un premier moyen de mesure (805) en vue de mesurer une première différence de phase entre un signal que ladite station mobile (14) transmet à ladite station de base (12) et un signal qui a été transmis de ladite station de base (12) à ladite station mobile (14) ; et
un premier moyen de transmission (806) en vue de transmettre ladite première différence de phase mesurée au niveau dudit premier moyen de mesure (805) à ladite une autre station de base (13) lorsque ladite station mobile (14) demande ledit transfert intercellulaire, et
ladite une autre station de base (13), comportant :
un second moyen de mesure (708) en vue de mesurer une seconde différence de phase entre un signal que ladite une autre station de base (13) transmet à ladite station mobile (14) et un signal qui a été transmis de ladite station mobile (14) à ladite une autre station de base (13) lorsque ledit transfert intercellulaire est exécuté ;
un moyen d'ajustement (705) en vue d'ajuster une phase de sorte que la phase dudit signal transmis de ladite une autre station de base (13) à ladite station mobile (14) soit égale à la phase dudit signal transmis de ladite station de base (12) à ladite station mobile (14) en utilisant des informations de ladite première différence de phase et de ladite seconde différence de phase ; et
un second moyen de transmission (709) en vue de transmettre un signal, que ledit moyen d'ajustement (705) a ajusté, à ladite station mobile (14) après que ledit transfert intercellulaire a été exécuté, dans lequel :
ladite une autre station de base (13) est utilisable en vue de transmette un signal synchronisé avec ledit signal, qui a été transmis de ladite station de base (12) à ladite station mobile (14), au niveau de ladite station mobile (14) après que ledit transfert intercellulaire a été exécuté, par ledit second moyen de transmission (709) et de transmettre ledit signal ajusté au niveau dudit moyen d'ajustement (705) à ladite station mobile (14).

2. Système de communication mobile selon la revendication 1, dans lequel :
chacune de ladite une pluralité de stations de base (12, 13) utilise des signaux de la même bande de fréquence, et
ladite pluralité de stations de base (12, 13) exécute une pluralité de communications mobiles au même moment.

3. Système de communication mobile selon la revendication 1 ou 2, dans lequel:
ladite station de base (12) et ladite une autre station de base (13) à laquelle ledit transfert intercellulaire est exécuté sont connectées au même dispositif d'étage de sélection supérieur.

4. Station mobile (14) dans un système de communication mobile, comportant :
un moyen de mesure (805) en vue de mesurer une première différence de phase entre un signal que ladite station mobile (14) transmet à une station de base (12) à partir de laquelle un transfert intercellulaire est exécuté et un signal qui a été transmis de ladite station de base (12) à partir de laquelle ledit transfert intercellulaire est exécuté à ladite station mobile (14) ; et
un moyen de transmission (806) en vue de transmettre ladite première différence de phase mesurée au niveau dudit moyen de mesure (805) à une autre station de base (13) à laquelle ledit transfert intercellulaire est exécuté lorsque ladite station mobile (14) demande ledit transfert intercellulaire.

5. Station de base dans un système de communication mobile, comportant :
un moyen de mesure (708) en vue de mesurer une seconde différence de phase entre un signal qui est transmis de ladite station de base (12) à une station mobile (14) et un signal qui inclut des données d'une première différence de phase et est transmis de ladite station mobile (14) à ladite station de base (12), la première différence de phase étant une différence de phase entre un signal qui est transmis de ladite station mobile (14) à une autre station de base (13) et un signal qui est transmis d'une autre station de base (13) à ladite station mobile ;
un moyen d'ajustement (705) en vue de synchroniser la seconde différence de phase à la première différence de phase; et
un moyen de transmission (709) en vue de transmettre un signal, que ledit moyen d'ajustement (705) a ajusté, à ladite station mobile (14) après que ledit transfert intercellulaire a été exécuté.

6. Procédé de communication mobile dans un système de communication mobile dans lequel une pluralité de stations de base et une pluralité de stations mobiles sont délivrées, et
dans le cas où une station mobile (14) demande un transfert intercellulaire de la zone sans fil d'une station de base (12) dans laquelle ladite station mobile (14) existe à la zone sans fil d'une autre station de base (13) à laquelle ledit transfert intercellulaire est exécuté lorsque ladite station mobile (14) se déplace
ladite station mobile (14), exécutant les étapes consistant à
mesurer une première différence de phase entre un signal que ladite station mobile (14) transmet à ladite station de base (12) et un signal qui a été transmis de ladite station de base (12) à ladite station mobile (14) ; et
transmettre ladite première différence de phase mesurée à ladite une autre station de base (13) lorsque ladite station mobile (14) demande ledit transfert intercellulaire, et
ladite une autre station de base (13), exécutant les étapes consistant à
mesurer une seconde différence de phase entre un signal que ladite une autre station de base (13) transmet à ladite station mobile (14) et un signal qui a été transmis de ladite station mobile (14) à ladite une autre station de base (13) lorsque ladite station mobile (14) exécute ledit transfert intercellulaire ;
ajuster une phase de sorte que la phase dudit signal transmis de ladite une autre station de base (13) à ladite station mobile (14) est rendue égale à la phase dudit signal transmis de ladite station de base (12) à ladite station mobile (14) en utilisant des informations de ladite première différence de phase et de ladite seconde différence de phase ; et
transmettre un signal, qu'un moyen d'ajustement (705) a ajusté, à ladite station mobile (14) après que ledit transfert intercellulaire a été exécuté, moyennant quoi
ladite une autre station de base (13) transmet un signal synchronisé avec ledit signal, qui a été transmis de ladite station de base (12) à ladite station mobile (14), à ladite station mobile (14) après que ledit transfert intercellulaire a été exécuté, par un second moyen de transmission (709) et transmet ledit signal ajusté au niveau dudit moyen d'ajustement (705) à ladite station mobile (14).
